# EUROPEAN PATENT SPECIFICATION

(11) **EP 0 757 896 B1**
(45) Date of publication and mention of the grant of the patent: **09.05.2001**
(21) Application number: 96112545.7
(22) Date of filing: 02.08.1996
(51) Int. Cl.: A23N 1/00

(54) **Filtering device for a citrus juice extraction machine and configuration of a perforating filtering tube for the extraction of fruit juices**
Filtervorrichtung für eine Zitronensaftextraktionsmaschine und Konfiguration eines Perforator-Filterrohres für die Extraktion von Früchtensäften
Filtre pour une machine d'extraction de jus de citrons et configuration d'un tube perforateur filtrant pour l'extraction de jus de fruits

(30) Priority: 07.08.1995 BR 7501563; 07.08.1995 BR 9503109; 07.08.1995 BR 5501053
(43) Date of publication of application: 12.02.1997
(73) Proprietor: Mendes, Carlos Neto, Sao Paulo CEP 14.801-320 (BR)
(72) Inventor: Mendes, Carlos Neto, Sao Paulo CEP 14.801-320 (BR)
(74) Representative: Wagner, Karl H., Dipl.-Ing.

(56) References cited:
- EP-A- 0 442 535
- GB-A- 2 116 021
- US-A- 3 236 175
- US-A- 4 700 620
- US-A- 5 655 441

## Description

The patent referred to here as "IMPROVEMENT TO A FILTERING DEVICE FOR A CITRUS JUICE EXTRACTION MACHINE", as the nomenclature applies, comprises improvements which consist of a singular mechanical device of automatic functioning, that by incorporation to the citrus juice extraction machine, increases substantially its productivity and the quality of the obtained product (juice), be it that at every cycle of operation the system passes through a total cleaning and the refuse from the fruit are expelled into a single reservoir, which facilitates the sanitation of the equipment and avoids the proliferation of bacteria.

For such, one of the details of the device refers to a perforating tube (described in process "PI 9502244-9" of June 19, 1995 cf. US-A-5655441), which was incorporated into a high efficiency filtering system, since it is self cleaning.

It is worth noting that there does not exist any electromechanical device for the driving of the said assembly, which consists basically of the perforating filter and a piston concentric to same, which promotes the internal scraping of the filter in order to clean it.

Such device is totally unknown by the state of the technology and its installation guarantees a relevant increase in the productivity of the assembly.

GB-A-2116021 discloses a filtering device for a juice extracting machine comprising a perforating tube and a tubular juice collector.

To better elucidate the model, references will be made to the following included drawings, where:

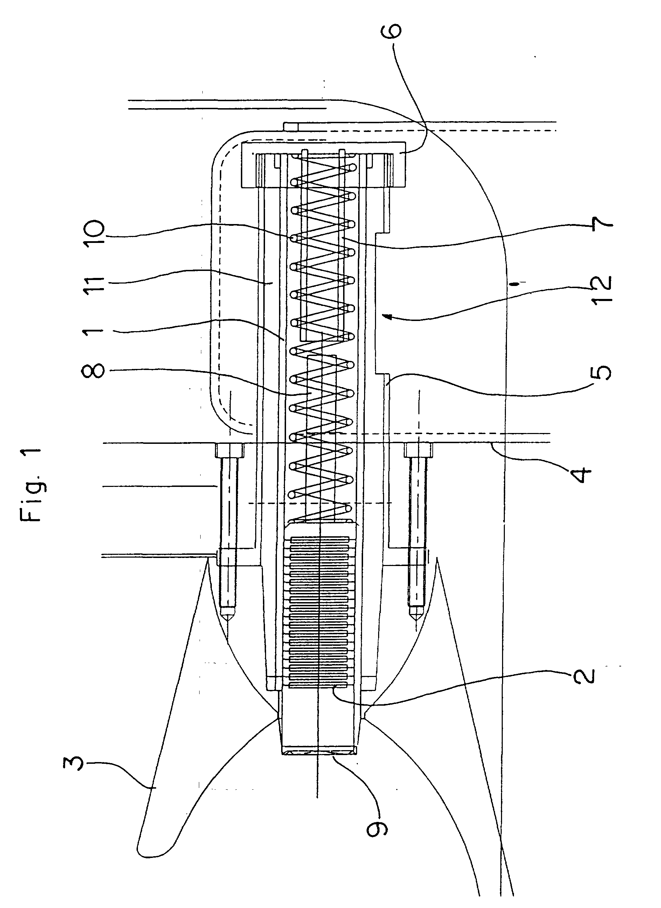

FIGURE 1 shows a side view of the machine, displaying details of the device.

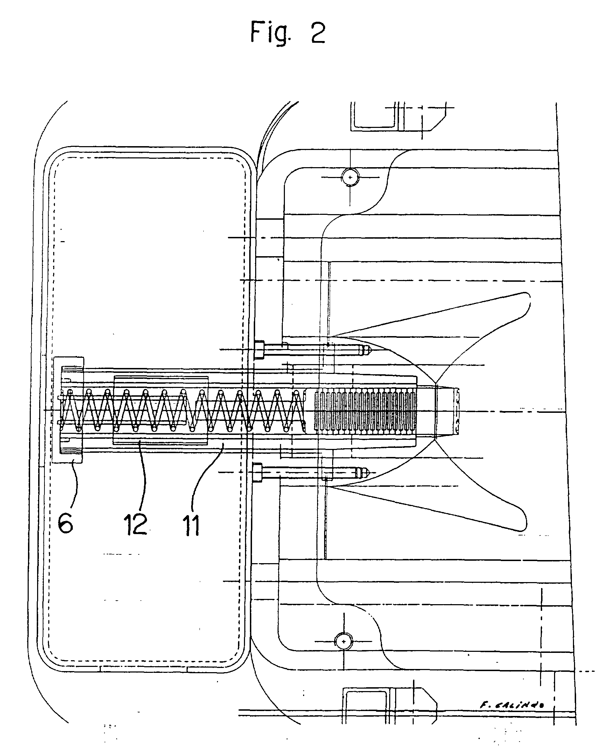

FIGURE 2 illustrates a plan view of the device installed on the machine.

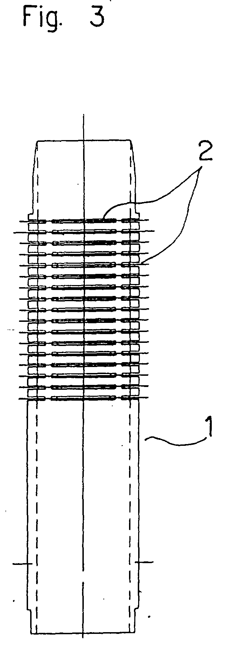

FIGURE 3 illustrates the perforating filter.

"IMPROVEMENT TO A FILTERING DEVICE FOR A CITRUS JUICE EXTRACTION MACHINE", constituted by an automatic system, composed by an extended perforating tube (1) having multiple transverse slits (2) of increasing width from inside to outside, being said tube (1) concentrically affixed to the fixed peeler (3), mounted with bolts to the side wall of the machine (4) jointly with the flange of the tubular juice collector (5), which projects itself outwardly from the machine.

Said juice collector (5) has a threaded cover (6), concentrically to which engages the perforating tube (1), being on said cover (6) built-in a tubular extension (7) on which slides a rod (8) connected to the piston (9) which works inside the tube (1), being that the cutting extremity projects itself out of this tube in order to expel the refuse for the pressing of the fruit, since during the pressing the piston is impelled inwardly to the tube (1) and in this manner offers a counter pressure on the flow of extraction, due to the action of a helical compression spring (10).

The juice is filtered by the slits (2) which by its configuration is self cleaning, passing through a chamber (11) formed by the juice collector (5) and the peeler (3). The juice is totally filtered, then exiting through a window (12) on the juice collector, directly to the interior of a dedicated reservoir.

The refuse materials are collected by a central reservoir; being observable that this system, allied to the use on stainless steel materials, guarantees the maintenance of the organoleptic characteristics of the extracted juice.

### SUMMARY

"IMPROVEMENT TO A FILTERING DEVICE FOR A CITRUS JUICE EXTRACTION MACHINE", composed of improvements introduced to the filtering system of the machine of the claimant consisting of a perforating tube (1) having multiple transverse slits (2) of increasing width from inside to outside, concentric to the peeler (3), and the tubular juice collector (5), that has a window opening (12) and a threaded cover (6), which centers the tube (1), being built-in a tubular extension (7) on which slides a rod (8) connected to the piston (9) pushed by the spring (10) being that the cutting extremity of the piston extends outward of the tube (1); a chamber (11) collects the juice filtered through the slits (2).

"A FILTERING DEVICE FOR A CITRUS JUICE EXTRACTION MACHINE", as the title implies, comprises improvements to the object described in process "PI 9502244-9" of June 19, 1995, of the same claimant, improvements which consist of singular mechanical device that functions. automatically, that once incorporated into the machine, increases substantially its productivity and the quality of the obtained product (juice), be it that at every cycle of operation the systems passes through a total cleaning and the refuse from the fruit are expelled into a single reservoir, which facilitates the sanitation of the equipment and avoids proliferation of bacteria.

For such, one of the details of the device refers to a perforating tube (already described in another descriptive report), which was incorporated into high efficiency filtering system, since it is self cleaning.

It is worth noting that there does not exist any electromechanical device for the driving of the said assembly, which consists basically of the perforating filter and a piston concentric to same, which promotes the internal scraping of the filtering in order to clean it.

Such device is totally unknown by the state of the technology and its installation guarantees a relevant increase in the productivity of the assembly.

To better elucidate the model, references will be made to the following included drawings, where:

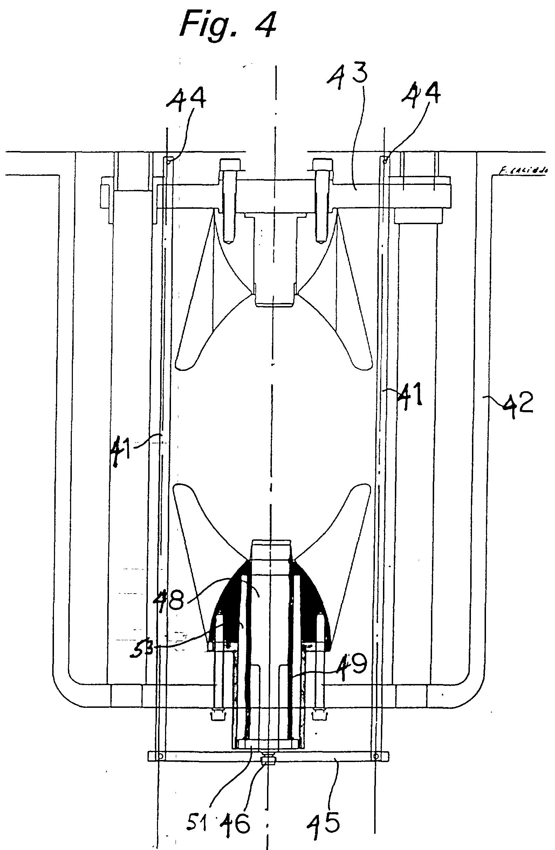

FIGURE 4 illustrates the top view detailing the device in question together with the cutting, pressing and juice extraction mechanism.

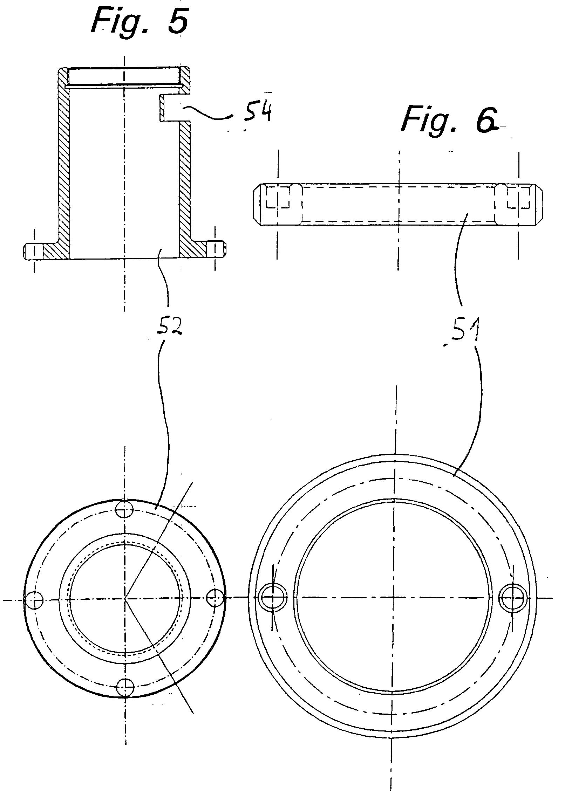

FIGURE 5 illustrates a cross-sectional side view and top view of the juice collector.

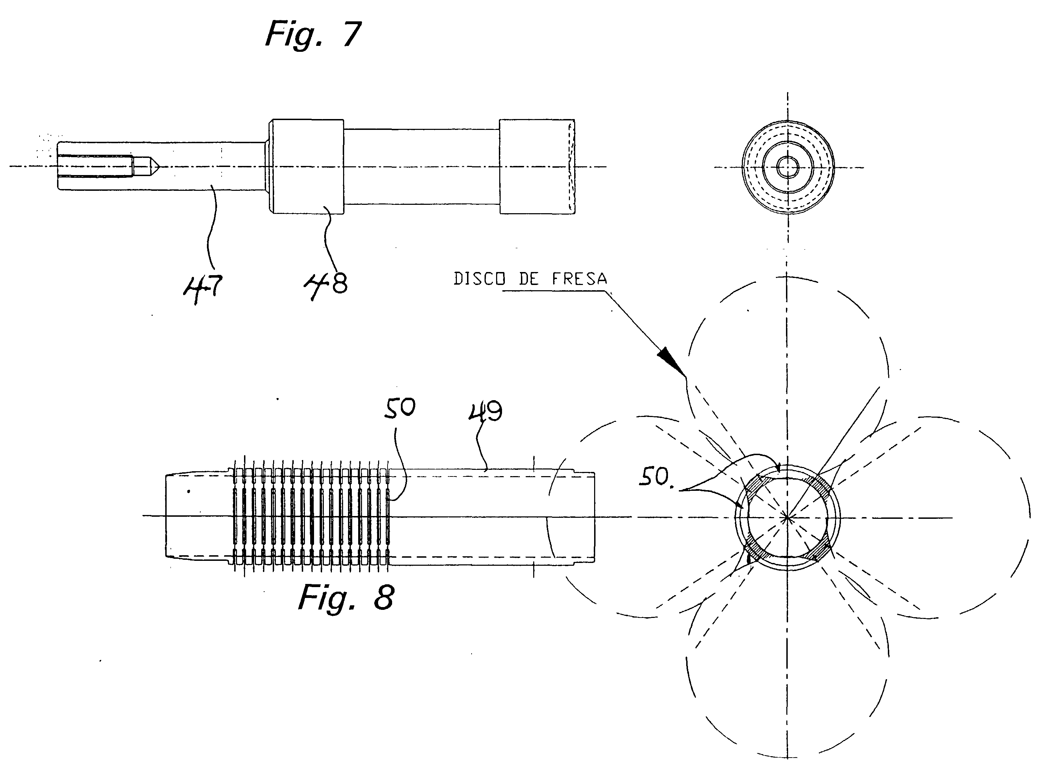

FIGURE 6 illustrates on a larger scale the support of the perforating filter.

FIGURE 7 illustrates the perforating tube's piston.

FIGURE 8. illustrates the cross section of the perforating filtering tube.

"A FILTERING DEVICE FOR A CITRUS JUICE EXTRACTION MACHINE", composed by two rods (41) passing through the machine's structure (42), and the sliding mobile peeler support (43). Said rods contain pins (44) which condition their return concurrently with the support (43) after the pressing of the fruit.

A base (45) is affixed to the two rods (41) in a manner such that the configuration facilitates the disassembly for cleaning purposes; on this base there is inserted a bolt (46) which mounts the extension (47) to the piston (48) (which need not have a same diameter relief at the center) which works concentric to the perforating tube (49) which in turn is concentric to the fixed peeler, mounted on the machine.

The piston (48) contains a cutting edge which projects itself out of the tube (49) at the end of the opening cycle of the peelers, so that it totally cleans the interior of this tube which contains a plurality transverse slits (50) which have increasing diameters from inside to outside, in a manner to facilitate the self cleaning.

The tube (49) is mounted to a round base (51) threaded to the tubular juice collector (52) which has a flange on which the static peeler is bolted to. Said collector and the peeler form a chamber (53) which collects the juice extracted from the fruit and filtered by the slits (50).

On the posterior position (outside of the machine) the collector (52) has a transverse slit (54) through which the totally filtered juice exits. The refuse materials (seed, core, etc.) pushed by the piston (48) fall inside the machine into a dedicated container.

It is worth noting that the constructive characteristics, allied to the utilization of stainless steel materials do not offer any alterations to the organoleptic characteristics of the fruit juice.

"A FILTERING DEVICE FOR A CITRUS JUICE EXTRACTION MACHINE", developed for an equipment of the same claimant, being that its improvements are composed of two rods (41) passing through the machine's structure (42), and the sliding mobile peeler support (43) having pins (44) which condition the return of these rods to the support (43) being these rods fixed to a base (45) to which there is inserted a bolt (46) fixing the extension (47) to the piston (48) which contains a cutting edge and is concentric to the perforating tube (49) having multiple transverse slits (50) which is mounted to a round base (51) threaded to the tubular _juice collector (52) which has a flange on which the static peeler is bolted on to so as to form the chamber (53) which collects the juice, which in turn exits through slit (54).

"CONFIGURATION OF A PERFORATING FILTERING TUBE FOR THE EXTRACTION OF FRUIT JUICE", fabricated in stainless steel material or the like, an accessory utilized on the equipment described in process "PI 9502244-9" of June 19, 1995, of the same claimant, which is designed for cutting and perforating of fruit and filtering of the juice extracted, such as: lemon, orange, tangerine, pokan, etc., for the extraction of their juice, with greater quality, practicality and hygiene, thanks to the configuration of the artifact.

The object consists of a tubular part having multiple symmetrical slits, trochoidal and parallel to each other, through which the extracted fruit juice exits, being said part installed on the pressing assembly of the machine.

Said object makes a central cut on the fruit through which the juice exits to be filtered by the aforementioned self cleaning slits, thanks to their configuration.

It is worth noting that the object in question presents singular details in comparison to the state of the technology, encompassing therefore the conditions to achieve the privilege seeked.

To better comprehend the model, references will be made to the following included drawings, where:

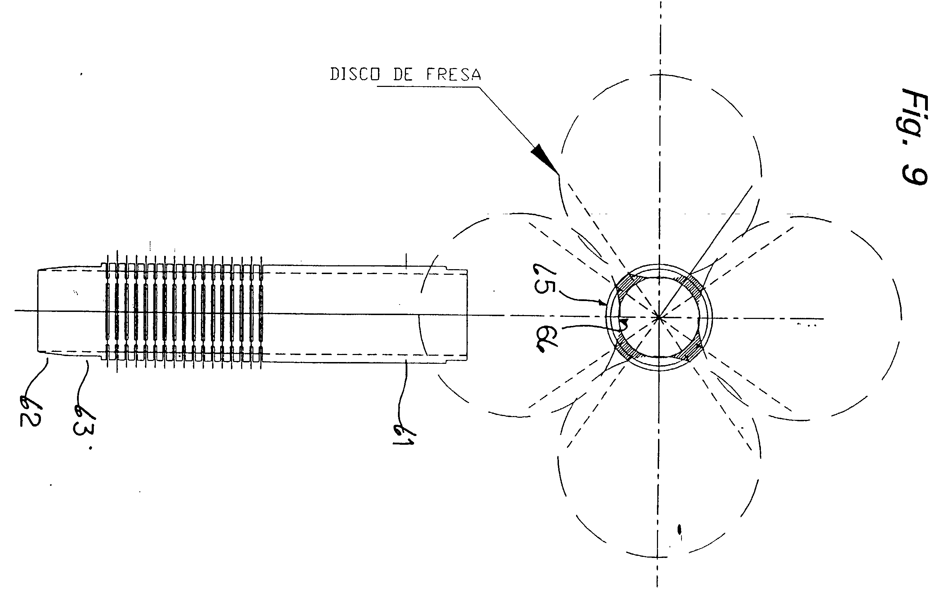

FIGURE 9 shows the tube in a cross-sectional view and a side view.

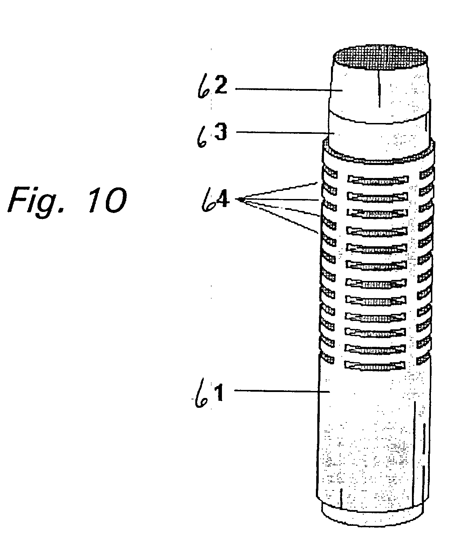

FIGURE 10 shows the tube perspective.

"CONFIGURATION OF A PERFORATING FILTERING TUBE FOR THE EXTRACTION OF FRUIT JUICE", composed of a body (61) of stainless steel material or other materials resistant to oxidation and adapted to this purpose, having a circular shape.

Its extremity (62) is sharpened in order to perforate the fruit, followed by a straight portion (63). The body (61) has a plurality of transverse slits (64), configured strategically through the machining by a circular mill, forming an external diameter (65) which is larger than the internal diameter (66), which in turn impedes the retention of filtered residues.

According to its broadest aspect the invention relates to a filtering device in particular for a citrus juice extracion machine, having a perforating tube (1) and a tubular juice collector (5), and
a chamber (11) collects the juice filtered through the slits(2).

## Claims

1. A FILTERING DEVICE FOR A CITRUS JUICE EXTRACTION MACHINE comprising:
a) a perforating tube (1) having multiple trochoidal transverse slits (2) of increasing width from the inside to the outside, said tube being concentric to a peeler (3);
b) a tubular juice collector (5) having a window opening (12);
c) a threaded cover (6) centering the tube (1);
d) a built-in tubular extension (7) on said cover;
e) a rod (8) slidable on said extension (7);
f) a piston (9) adapted to be pushed by a spring (10) and connected to the rod (8), said piston further having a cutting extremity extending outward of the tube (1); and
g) a chamber (11) collecting the juice filtered through the slits (2).

2. A FILTERING DEVICE FOR A CITRUS JUICE EXTRACTION MACHINE according to claim 1, further comprising two rods (41) passing through the machine's structure (42), and a sliding mobile peeler support (43) having pins (44) which in turn are fixed to a base (45) to which there is inserted a bolt (46) fixing the extension (47) to the piston (48) which contains a cutting edge and is concentric to a perforating tube (49) having multiple transverse slits (50) which is mounted to a round base (51) threaded to a tubular juice collector (52) which has a flange on which a static peeler is bolted on to so as to form a chamber (53) which collects the juice, which in turn exits through slit (54).

3. A FILTERING DEVICE FOR A CITRUS JUICE EXTRACTION MACHINE, according to claim 2, wherein the cutting edge of the piston (48) protrudes out of the tube (49) on its return course, said slits (50) of this tube having an increasing diameter from inside to outside of the tube.

## Patentansprüche

1. Filtervorrichtung für eine Zitronensaftextraktionsmaschine, die folgendes aufweist:
a) eine Perforierungsröhre (1) mit mehreren trochoidalen (trochoidal) querlaufenden Schlitzen (2) mit von der Innenseite zur Außenseite größer werdender Breite, wobei die Röhre konzentrisch zu einem Schäler (3) ist:
b) einen röhrenförmiger Saftsammler (5) mit einer Fensteröffnung (12);
c) eine mit Gewinde versehene Abdeckung (6), die die Röhre (1) zentriert;
d) eine eingebaute röhrenförmige Verlängerung (7) auf der Abdeckung;
e) einen auf der Verlängerung (7) verschiebbaren Stab (8);
f) einen Kolben (9) der dafür ausgelegt ist, durch eine Feder (10) gedrückt zu werden und mit dem Stab (8) verbunden ist, wobei der Kolben weiter einen Schneidearm bzw. ein Schneideglied aufweist, der sich von der Röhre (1) nach außen erstreckt; und
g) eine Kammer (11) die den durch die Schlitze (2) gefilterten Saft sammelt.

2. Filtervorrichtung für eine Zitronensaftextraktionsmaschine nach Anspruch 1, die weiterhin folgendes aufweist: zwei Stäbe (41), die durch den Maschinenaufbau (42) durchragen und einen gleitbar beweglichen Schälträger (43) mit Stiften (44) aufweisen, die wiederum an einer Basis (45) befestigt sind, in der ein Bolzen (46) eingefügt ist, der die Verlängerung (47) an den Kolben (48) befestigt, welcher eine Schneidkante umfaßt und zu der perforierenden Röhre (49) mit mehreren querverlaufenden Schlitzen (50) konzentrisch ist, die auf eine runde Basis (51) montiert ist, die an einem röhrenförmigen Saftsammler (52) geschraubt ist, der einen Flansch hat, auf dem ein statischer bzw. fester Schäler genietet ist, um eine Kammer (53) zu bilden, die den Saft, der durch die Schlitze (54) austritt, sammelt.

3. Eine Zitronensaftextraktionsmaschine nach Anspruch 2, wobei die Schneidekante des Kolbens (48) auf ihrem Rückweg aus der Röhre (49) herausragt, wobei die Schlitze (50) dieser Röhre einen sich von der Innenseite zu der Außenseite der Röhre vergrößernden Durchmesser haben.

## Revendications

1. Dispositif de filtrage pour une machine d'extraction de jus de citron comprenant :
a) un tube perforant (1) comportant de multiples fentes transverses cycloïdales (2) de largeur croissante de l'intérieur vers l'extérieur, ce tube étant concentrique à un zesteur (3) ;
b) un collecteur de jus tubulaire (5) muni d'une ouverture (12) ;
c) un couvercle fileté (6) pour centrer le tube (1) ;
d) une extension tubulaire (7) solidaire du couvercle ;
e) une tige (8) pouvant coulisser sur l'extension (7) ;
f) un piston (9) adapté à être poussé par un ressort (10) et relié à la tige (8), le piston ayant en outre une extrémité coupante s'étendant vers l'extérieur du tube (1) ; et
g) une chambre (11) recueillant le jus filtré à travers les fentes (2).

2. Dispositif de filtrage pour machine d'extraction de jus de citron selon la revendication 1, comprenant en outre deux tiges (41) passant à travers la structure de la machine (42) et un support de zesteur mobile coulissant (43) comprenant des ergots (44) fixés à un support (45) dans lequel est insérée une tige filetée (46) fixant le prolongement (47) au piston (48) qui contient un bord coupant et est concentrique à un tube perforant (49) comportant des fentes transverses multiples (50) qui sont montées sur une base arrondie (51) vissée à un collecteur de jus tubulaire (52) qui comporte une extension sur laquelle un dispositif d'épluchage statique est vissé de façon à former une chambre (53) qui recueille le jus qui sort par une fente (54).

3. Dispositif de filtrage pour une machine d'extraction de jus de citron selon la revendication 2, dans lequel le bord de coupe du piston (48) fait saillie en dehors du tube (49) sur sa course de retour, les fentes (50) de ce tube ayant un diamètre croissant de l'intérieur vers l'extérieur du tube.
